# EUROPEAN PATENT APPLICATION

(11) **EP 3 136 258 A1**
(43) Date of publication of application: **01.03.2017**
(21) Application number: 16162185.9
(22) Date of filing: 24.03.2016
(51) Int. Cl.: G06F 17/28, G06F 17/30, G06F 3/048

(54) **TRANSLATION STRING AND CONTEXT SAVING IN TRANSLATION MEMORY DATABASE**

(30) Priority: 31.08.2015 CN 201510546607
(71) Applicant: Xiaomi Inc., Beijing 100085 (CN)
(72) Inventor: CHEN, Zhijun, 100085 Beijing (CN); WANG, Pingze, 100085 Beijing (CN); ZHANG, Tao, 100085 Beijing (CN)
(74) Representative: Steinbauer, Florian

(57) **Abstract**

The disclosure relates to method and device for string saving, which belongs to field of network technology. The method includes: acquiring (101, 201) a designated string to be saved; acquiring (102, 202) a translation result of the designated string; acquiring (103, 203) context information of the designated string; saving (104, 204) the designated string, the translation result of the designated string and the context information of the designated string in a preset string database in a correspondence manner. The disclosure enables saving of a designated string and context information thereof at the same time such that the designated string and the context information thereof can be displayed at the same time when an instruction of viewing the string saved in the preset string database from a user is detected, and thus prompt and learning effect can be improved and the user is able to quickly remind the string and its use scenes. (FIG.1)

## Description

### TECHNICAL FIELD

The present disclosure relates to the field of network technology, and more particularly, to a method and device for string saving.

### BACKGROUND

With development of network related technologies, a user is able to obtain more and more variety of information via a network, wherein text information includes domestic, e.g. Chinese, language information and other foreign language information. In order to attain interchange of cultures and technologies among different countries, one way is to read foreign language information to get knowledge of development of technologies as well as customs and cultures, etc. of other countries. However, if a user does not have all the knowledge about foreign languages, a translation application is desired to provide translation service to help the user to understand foreign language information.

Currently, a translation application performs translation for a string after it acquires the string desired by a user to be translated and displays a translation result on a screen. Further, in order for convenience to review by a user, the translation application stores the string and the translation result and displays them when an instruction of viewing from a user is detected.

With the foregoing method, it is possible for a user to obtain a translation result of a string, and to quickly get the saved history information when the user wants to review. However, with only the string and its translation result being displayed, it is difficult to remind the user of context information of the string, and thus a better learning effect cannot be attained.

### SUMMARY

In order to solve problems in related prior arts, there is provided a method and device for string saving in the present disclosure having the features of the independent claims.

According to a first aspect of embodiments of the disclosure, there is provided a method for string saving, comprising:
acquiring a designated string to be saved;
acquiring a translation result of the designated string;
acquiring context information of the designated string;
saving the designated string, the translation result of the designated string and the context information of the designated string in a preset string database in a correspondence manner.

Advantageously, said acquiring a designated string to be saved comprises:
determining any string as the designated string to be saved when a truncation operation of a mouse on the string is detected; or
determining any string as the designated string to be saved when a time period of cursor of a mouse staying over the string is detected to be longer than a preset time period.

Advantageously, after said saving the designated string, the translation result of the designated string and the context information of the designated string in a preset string database in a correspondence manner, the method further comprises:
displaying the designated string, the translation result of the designated string and the context information of the designated string when an instruction of viewing the designated string in the preset string database is detected.

Advantageously, the method further comprises:
acquiring saving time information of the designated string, the translation result of the designated string and the context information of the designated string; and
saving the saving time information in the preset string database together with saving of the designated string, the translation result of the designated string and the context information of the designated string in a correspondence manner.

Advantageously, said acquiring context information of the designated string comprises:
acquiring screen shot of current location of the designated string; and
identifying the context information of the designated string according to result of the screen shot.

According to a second aspect of embodiments of the present disclosure, there is provided a device for string saving, comprising:
a first acquiring module configured to acquire a designated string to be saved;
a second acquiring module configured to acquire a translation result of the designated string;
the first acquiring module is further configured to acquire context information of the designated string;
a saving module configured to save the designated string, the translation result of the designated string and the context information of the designated string in a preset string database in a correspondence manner.

Advantageously, said first acquiring module is configured to:
determine any string as the designated string to be saved when a truncation operation of a mouse on the string is detected; or
determine any string as the designated string to be saved when a time period of cursor of a mouse staying over the string is detected to be longer than a preset time period.

Advantageously, the device further comprises:
a displaying module configured to display the designated string, the translation result of the designated string and the context information of the designated string when an instruction of viewing the designated string in the preset string database is detected.

Advantageously, the first acquiring module is further configured to acquire saving time information of the designated string, the translation result of the designated string and the context information of the designated string; and
the saving module is further configured to save the saving time information in the preset string database together with saving of the designated string, the translation result of the designated string and the context information of the designated string in a correspondence manner.

Advantageously, the second acquiring module is configured to:
acquire screen shot of current location of the designated string; and
identify the context information of the designated string according to result of the screen shot.

According a third aspect of embodiments of the present disclosure, there is provided a device for string saving, comprising:
a processor;
a memory for storing instructions executable by the processor;
wherein the processor is configured to:
acquiring a designated string to be saved;
acquiring a translation result of the designated string;
acquiring context information of the designated string;
saving the designated string, the translation result of the designated string and the context information of the designated string in a preset string database in a correspondence manner.

According to technical solutions in implementations of the present disclosure, the following technical effect can be attained.

The disclosure enables saving of a designated string and context information thereof at the same time such that the designated string and the context information thereof can be displayed at the same time when an instruction of viewing the string saved in the preset string database from a user is detected, and thus prompt and learning effect can be improved and thereby the user is able to quickly remind the string and its use scenes.

It is to be understood that both the forgoing general descriptions and the following detailed descriptions are exemplary and explanatory only, and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart showing a method for string saving according to an exemplary embodiment of the present disclosure;
Fig. 2A is a flow chart showing a method for string saving according to an exemplary embodiment of the present disclosure;
Fig. 2B is a schematic diagram illustrating display of a string according to an exemplary embodiment of the present disclosure;
Fig. 2C is a schematic diagram illustrating display of a string according to an exemplary embodiment of the present disclosure;
Fig. 3 is a block diagram illustrating a device for string saving according to an exemplary embodiment of the present disclosure;
Fig. 4 is a block diagram illustrating a device 400 for string saving according to an exemplary embodiment of the present disclosure;
Fig. 5 is a block diagram illustrating a device 500 for string saving according to an exemplary embodiment of the present disclosure.

### DETAILED DESCRIPTION

In order for clearly clarifying the purposes, the technical solutions and advantages of the disclosure, some implementations of the present disclosure will be further described in details by reference to the accompanying drawings.

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with aspects related to the present disclosure as recited in the appended claims.

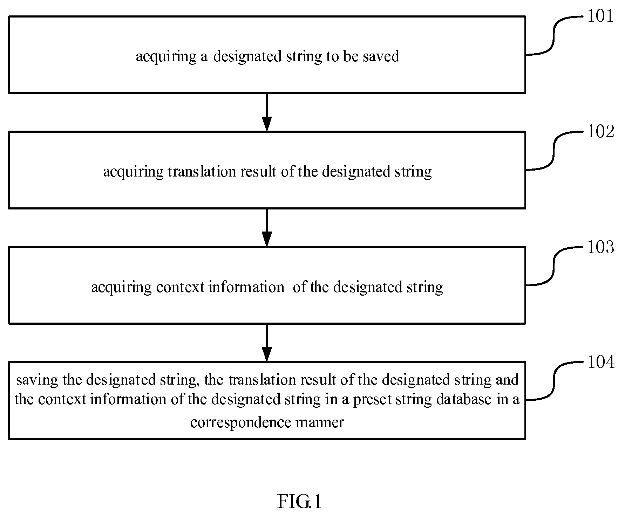

Fig. 1 is a flow chart of a method for string saving according to an exemplary embodiment of the present disclosure. As shown in Fig.1, the method for string saving may be used in a terminal, and comprises the following steps.
In step 101, acquiring a designated string to be saved.
In step 102, acquiring a translation result of the designated string.
In step 103, acquiring context information of the designated string.
In step 104, saving the designated string, the translation result of the designated string and the context information of the designated string in a preset string database in a correspondence manner.

The disclosure enables saving of a designated string and context information thereof at the same time such that the designated string and the context information thereof can be displayed at the same time when an instruction of viewing the string saved in the preset string database from a user is detected, and thus prompt and learning effect can be improved and thereby the user is able to quickly remind the string and its use scenes.

Advantageously, said acquiring a designated string to be saved comprises:
determining any string as the designated string to be saved when a truncation operation of a mouse on the string is detected; or
determining any string as the designated string to be saved when a time period of cursor of a mouse staying over the string is detected to be longer than a preset time period.

Advantageously, after said saving the designated string, the translation result of the designated string and the context information of the designated string in a preset string database in a correspondence manner, the method further comprises:
displaying the designated string, the translation result of the designated string and the context information of the designated string when an instruction of viewing the designated string in the preset string database is detected.

Advantageously, the method further comprises:
acquiring saving time information of the designated string, the translation result of the designated string and the context information of the designated string; and
saving the saving time information in the preset string database together with saving of the designated string, the translation result of the designated string and the context information of the designated string in a correspondence manner.

Advantageously, said acquiring context information of the designated string comprises:
acquiring screen shot of current location of the designated string; and
identifying the context information of the designated string according to result of the screen shot.

All of the forgoing optional technical solutions may be combined in an arbitrary manner to form an alternative embodiment of the disclosure, which will not be elaborated herein.

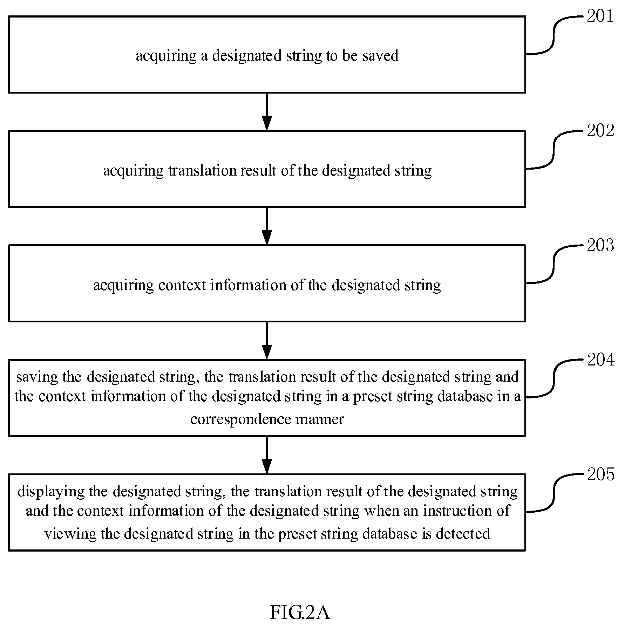

Fig.2A is a flow chart illustrating a method for string saving according to an exemplary embodiment of the present disclosure. The implementing subject of the embodiment may be a terminal. Referring to Fig.2A, the embodiment particularly comprises the following steps.

In step 201, acquiring a designated string to be saved.

The designated string may be a word desired to be translated, or desired to be saved after translation for further review. The two following methods may be used for determining a designated string.

The first method is to determine any string as the designated string to be saved when a truncation operation of a mouse on the string is detected. The truncation operation refers to drawing through the entire content of the string by cursor of a mouse, which generally include three following steps: pressing a left key of the mouse when the cursor stays over start or end of the string; dragging the cursor to the end or the start of the string; and releasing the left key of the mouse. By doing so, a truncation operation for the string is completed.

The second method is to determine any string as the designated string to be saved when a time period of cursor of a mouse staying over the string is detected to be longer than a preset time period. The location of the cursor staying over the string may be at a position displaying the string on a screen, or may be within a designated range comprising the position displaying the string on the screen. The preset time period may be in the order of a second.

The forgoing methods for determining any string as the designated string to be saved are provided only for word selection with a mouse. For a terminal with a touch screen, determination of any string as the designated string may be done based on particular location and stay time of a touch operation, or the like. Its method is similar with the above discussed determination method for a mouse, and thus will be not elaborated herein.

It step 202, acquiring a translation result of the designated string.

Taking the designated string acquired in step 201 as a string to be translated, a search is made using a translation engine with the string as an index to obtain a translation result of the string. The following two methods may be used for acquiring a translation result.

The first method is to search, in a basic lexicon to store basic interpretations of strings, for a translation result of the string when the terminal is in a status disconnected with a network. The translation result acquired from the basic lexicon will be used as a final translation result.

The second method is to search in a network-based lexicon for a translation result of the string in addition to a translation result of the string searched in a basic lexicon when the terminal is in a status connected with a network. The network-based lexicon stores interpretations of strings over the network and contents stored in the network-based lexicon may be updated periodically to provide translation results of strings in an updated and complete manner. Said translation result includes the translation result acquired from the basic lexicon and the translation result acquired from the network-based lexicon.

Moreover, when the terminal is in a status connected with a network, it is possible to search directly in a network-based lexicon for a translation result of a string. The method for acquiring the translation result is not limited to the embodiment of the present disclosure.

It should be noted that upon acquisition of the translation result, the translation result may be displayed nearby the corresponding string, or may be displayed nearby the cursor of the mouse. The position for displaying the translation result is not limited to the embodiment of the present disclosure.

It step 203, acquiring context information of the designated string.

The context information refers to information about a sentence or a paragraph to which the string currently belongs. The method for acquiring the context information may comprise the following two steps:
Step 1, screen shot of current location of the designated string is acquired. Display position information of the string on the screen may be obtained from the screen shot. The display position information may be coordinate information of pixels of a rectangle box of the screen shot.
Step 2, the context information of the designated string is identified according to result of the screen shot.

Specifically, the context information of the designated string is identified according to the display position information of the string on the screen acquired in Step 1. Particular, OCR (Optical Character Recognition) technology may be used for context information identification. When the context information is a sentence to which the designated string belongs, the identification may be conducted from the coordinate position of left side of the rectangular box of the screen shot toward a left direction, and when the identification proceeds to a punctuation representing end of the sentence, the identification is terminated and the identified content is determined as the context information. At the same time, the identification may be conducted from the coordinate position of right side of the rectangular box of the screen shot toward a right direction, and when the identification proceeds to a punctuation representing end of the sentence, the identification is terminated and the identified content is determined as the context information. The punctuation representing end of a sentence may be a full stop (.), an exclamation point (!), a question mark (?) and the like when the content to be identified is in foreign language. The punctuation representing end of a sentence may be a full stop (.), an exclamation point (!), a question mark (?) and the like when the content to be identified is in domestic (e.g. Chinese) language.

When the context information refers to a paragraph to which the designated string currently belongs, the identification may be conducted from the coordinate position of left side of the rectangular box of the screen shot toward a left direction, and when successive space symbols are detected, the identification is terminated and the identified content is determined as the context information. At the same time, the identification may be conducted from the coordinate position of right side of the rectangular box of the screen shot toward a right direction, and when successive space symbols are detected, the identification is terminated and the identified content is determined as the context information.

In addition to OCR technology for identifying the context information, other identification technologies may be used for identifying context information of the string, which is not limited to the embodiment of the disclosure.

In step 204, saving the designated string, the translation result of the designated string and the context information of the designated string in a preset string database in a correspondence manner.

The preset string database is used for saving a string, a translation result of the string, and context information of the string in order for a user to view and review in the future. The method for saving may be that: a determination as to whether the preset string database has the string to be saved is made, and if the preset string database does not have the string, the string, translation result of the string and the context information of the string are saved; and if the preset string database has the string, a determination as to whether the saved context information of the string is the same as the current context information of the string, and if yes, saving is not performed, and otherwise, the current context information of the string is saved at a position corresponding to the position at which the string is saved in the preset string database.

Moreover, in order for better prompt and learning effect, the preset string database may further save the saving time information for the context information of the string. A particular method for the saving may be that: a determination as to whether the preset string database has the string to be saved is made, and if the preset string database does not have the string, the string, translation result of the string and the context information of the string as well as the saving time information for the context information of the string are saved; and if the preset string database has the string, a determination as to whether the saved context information of the string is the same as the current context information of the string, and if yes, the saving time information for the context information of the string is updated, that is, the saving time for the context information of the string in the preset database is replaced with the current saving time for the context information of the string, and otherwise, the current context information of the string and the saving time are saved at a position corresponding to the position at which the string is saved in the preset string database.

The preset string database may further save other information related to the string to be saved. In addition to the above described method for saving, other methods may be used for the saving, which is not limited to the embodiment of the present disclosure.

In step 205, displaying the designated string, the translation result of the designated string and the context information of the designated string when an instruction of viewing the designated string in the preset string database is detected.

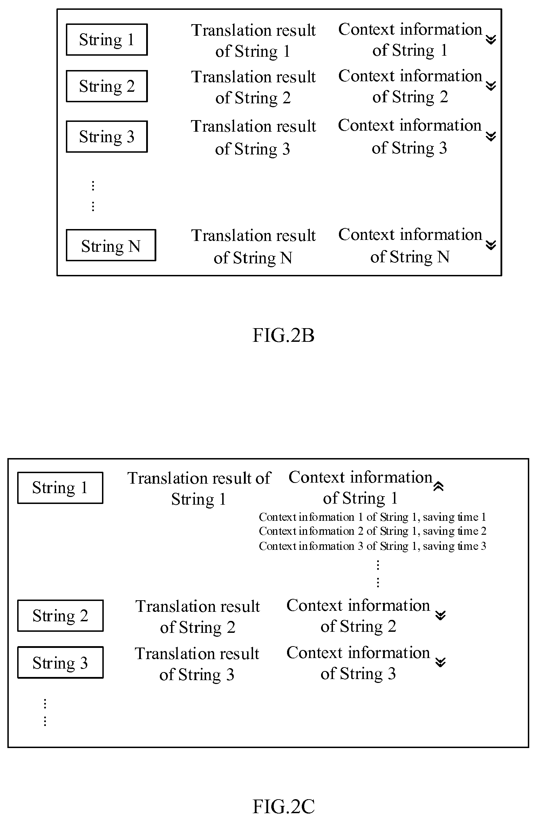

Fig.2B is a schematic diagram illustrating display of context information of strings. The method for determining sequence for display of strings may be that: when the strings are words in foreign language, the strings may be displayed in the order of a first letter of respective word; when the strings are in a Chinese language as an example of a domestic language, the strings may be displayed in the order of a first letter of Chinese Pinyin of a first word of the string; when saved contents comprise saving time information for context information of respective string, the strings may be displayed in the order of respective saving time. In addition to the above described methods, other methods may be used for display in a certain sequence, which is not limited to the embodiment of the disclosure.

Further, in order to display in an interface strings saved in the preset string database as many as possible, foldable display may be employed to display context information of strings. As shown in Fig.2B, the icon on the right side of the "context information of the String 1" is an icon for spreading display operation. When a click operation by a user on the icon is detected, the display interface is switched to the interface as shown in Fig.2C. In Fig.2C, the corresponding position spreads a display region in which the context information of the String 1 is displayed. In the case that saved contents comprise saving time information for context information of the string, the corresponding position may further display the saving time information. As shown in Fig.2C, the icon on the right side of the "context information of the String 1" is an icon for retraction display operation. When a click operation by a user on the icon is detected, the display interface is switched to the interface as shown in Fig.2B.

In addition to the above described method, other methods may be used to display context information of the string, which is not limited to the embodiment of the present disclosure.

The embodiment of the present disclosure enables saving of a designated string and context information thereof at the same time such that the designated string and the context information thereof can be displayed at the same time when an instruction of viewing the string saved in the preset string database from a user is detected, and thus prompt and learning effect can be improved and thereby the user is able to quickly remind the string and its use scenes. Moreover, with the foldable display, a display interface can display strings saved in the preset string database as many as possible, which enables convenience for a user to view.

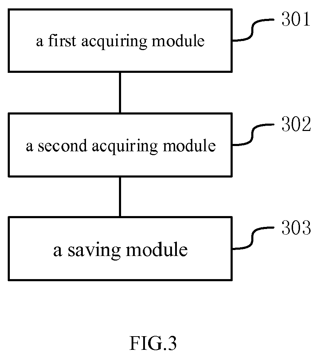

Fig.3 is a block diagram illustrating a device for string saving according to an exemplary embodiment of the present disclosure. Referring to Fig.3, the device comprises a first acquiring module 301, a second acquiring module 302 and a saving module 303.

The first acquiring module 301 is configured to acquire a designated string to be saved.

The second acquiring module is configured to acquire a translation result of the designated string.

The first acquiring module is further configured to acquire context information of the designated string;

The saving module is configured to saving the designated string, the translation result of the designated string and the context information of the designated string in a preset string database in a correspondence manner.

Advantageously, the first acquiring module is configured to determine any string as the designated string to be saved when a truncation operation of a mouse on the string is detected; and/or determine any string as the designated string to be saved when a time period of cursor of a mouse staying over the string is detected to be longer than a preset time period.

Advantageously, the device further comprises a displaying module configured to display the designated string, the translation result of the designated string and the context information of the designated string when an instruction of viewing the designated string in the preset string database is detected.

Advantageously, the first acquiring module is further configured to acquire saving time information of the designated string, the translation result of the designated string and the context information of the designated string; and the saving module is further configured to save the saving time information in the preset string database together with saving of the designated string, the translation result of the designated string and the context information of the designated string in a correspondence manner.

Advantageously, the second acquiring module is configured to acquire screen shot of current location of the designated string; and identify the context information of the designated string according to result of the screen shot.

With respect to the devices in the above embodiments, the specific manners for performing operations for individual modules therein have been described in detail in the embodiments regarding the methods for string saving, which will not be elaborated herein.

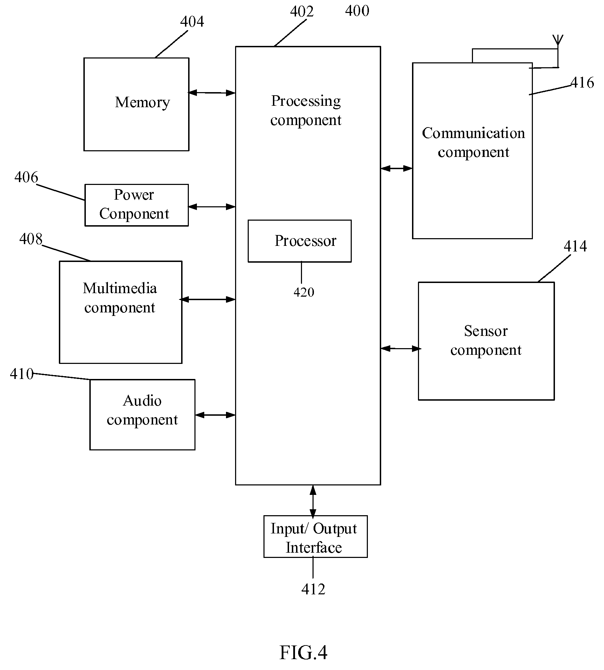

Fig. 4 is a block diagram illustrating a device 400 for string saving according to an exemplary embodiment of the present disclosure. For example, the device 400 may be a mobile phone, a computer, a digital broadcast terminal, a messaging device, a gaming console, a tablet, a medical device, an exercise equipment, a personal digital assistance, and the like.

Referring to Fig. 4, the device 400 may include one or more of the following components: a processing component 402, a memory 404, a power component 406, a multimedia component 408, an audio component 410, an input/output (I/O) interface 412, a sensor component 414 and a communication component 416.

The processing component 402 typically controls overall operations of the device 400, such as operations associated with display, telephone calls, data communications, camera operations, and recording operations. The processing component 402 may include one or more processors 420 to execute instructions to perform all of or part of the steps in the above described methods. Moreover, the processing component 402 may include one or more modules which facilitate the interaction between the processing component 402 and other components. For instance, the processing component 402 may include a multimedia module to facilitate the interaction between the multimedia component 408 and the processing component 402.

The memory 404 is configured to store various types of data to support the operation of the device 400. Examples of such data include instructions for any applications or methods operated on the device 400, contact data, phonebook data, messages, pictures, video, etc. The memory 404 may be implemented using any type of volatile or non-volatile storage devices or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic or optical disk.

The power component 406 provides power to various components of the device 400. The power component 406 may include a power management system, one or more power sources, and any other components associated with the generation, management and distribution of power in the device 400.

The multimedia component 408 includes a screen providing an output interface between the device 400 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 408 includes a frond camera and/or a rear camera. The front camera and/or the rear camera may receive an external multimedia datum while the device 400 is in an operation mode, such as photographing mode or a video mode. Each of the front camera and the rear camera may be a fixed optical lens system or have focus and optical zoom capability.

The audio component 410 is configured to input and/or output audio signals. For example, the audio component 410 includes a microphone ("MIC") configured to receive an external audio signal when the device 400 is in an operation mode, such as a call mode, a recording mode, and a voice recognition mode. The received audio signal may be further stored in the memory 404 or transmitted via the communication component 416. In some embodiments, the audio component 410 further includes a speaker to output audio signals.

The I/O interface 412 provides an interface between the processing component 402 and a periphery interface module, such as a keyboard, a click wheel, buttons, and the like. The buttons may include, but are not limited to, a home button, a volume button, a starting button, and a locking button.

The sensor component 414 includes one or more sensors to provide status assessment of various aspects of the device 400. For instance, the sensor component 414 may detect open/closed status of the device 400, relative positioning of components, e.g., the display and the keypad, of the device 400, a change in position of the device 400 or a component of the device 400, a presence or absence of user contact with the device 400, an orientation or an acceleration/deceleration of the device 400, and a change in temperature of the device 400. The sensor component 414 may include a proximity sensor configured to detect the presence of nearby objects without any physical contact. The sensor component 414 may also include a light sensor, such as a CMOS or CCD image sensor, for use in imaging application. In some embodiments, the sensor component 414 may also include an acceleration sensor, a gyroscope sensor, a magnetic sensor, a pressure sensor or a temperature sensor.

The communication component 416 is configured to facilitate communication, wired or wirelessly, between the device 400 and other devices. The device 400 can access a wireless network based on a communication standard, such as WiFi, 2G, 3G or 4G, or a combination thereof. In an exemplary embodiment, the communication component 416 receives a broadcast signal or broadcast associated information from an external broadcast management system via a broadcast channel. In an exemplary embodiment, the communication component 416 further includes a Near Field Communication (NFC) module to facilitate short-range communications. For example, the NFC module may be implemented based on a Radio Frequency Identification (RFID) technology, an Infrared Data Association (IrDA) technology, a Ultra Wideband (UWB) technology, a Blue Tooth (BT) technology, and other technologies.

In exemplary embodiments, the device 400 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, micro-processors, or other electronic components, for performing the above described methods.

In exemplary embodiments, there is also provided a non-transitory computer readable storage medium including instructions, such as included in the memory 404, executable by the processor 420 of the device 400, for performing the above described methods. For example, the non- transitory computer readable storage medium may be a ROM, a RAM, a CD-ROM, a magnetic tape, a floppy disk, an optical data storage device, and the like.

In exemplary embodiments, there is also provided a non- transitory computer readable storage medium. The instructions in the storage medium, when executed by a processor of a mobile terminal, enable the mobile terminal to perform the above described method for string saving.

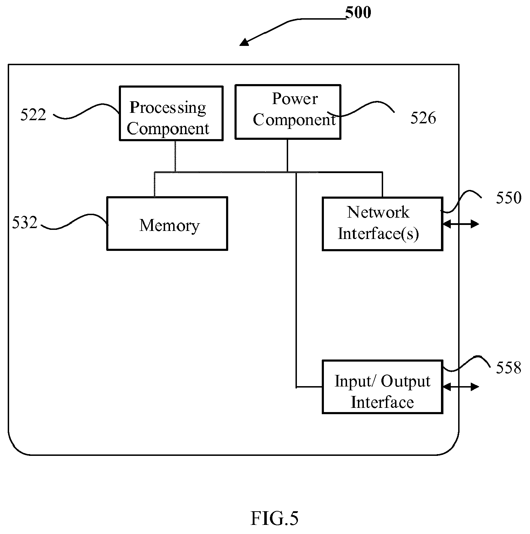

Fig. 5 is a block diagram illustrating a device 500 for string saving according to an exemplary embodiment of the disclosure. For example, the device 500 may be a server. Referring to Fig. 5, the device 500 includes a processing component 522 which in turn comprises one or more processors, and memory resources, represented by the memory 532, for storing instructions executable by the processing component 522, such as applications. The applications stored in the memory 532 may include one or more modules with each module corresponding to a set of instructions. Moreover, the processing component 522 is configured to perform instructions to implement the above described method for string saving.

The device 500 may also include a power component 526 configured to perform power management of the device 500; a wired or wireless network interface 550 configured to connect the device 500 to a network; and an input/output (I/O) interface 558. The device 500 can operate based on an operation system stored in the memory 532, such as Windows Server™, Mac OS X™, Unix™, Linux™, FreeBSD™, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. The specification and embodiments are merely considered to be exemplary and the substantive scope of the disclosure is limited only by the appended claims.

It should be understood that the disclosure is not limited to the precise structure as described above and shown in the figures, but can have various modification and alternations without departing from the scope of the disclosure. The scope of the disclosure is limited only by the appended claims.

## Claims

1. A method for string saving, **characterized in that** the method comprises:
acquiring (101, 201) a designated string to be saved;
acquiring (102, 202) a translation result of the designated string;
acquiring (103, 203) context information of the designated string;
saving (104, 204) the designated string, the translation result of the designated string and the context information of the designated string in a preset string database in a correspondence manner.

2. The method of claim 1, wherein said acquiring a designated string to be saved comprises:
determining any string as the designated string to be saved when a truncation operation of a mouse on the string is detected; or
determining any string as the designated string to be saved when a time period of cursor of a mouse staying over the string is detected to be longer than a preset time period.

3. The method of claim 1 or 2, wherein after said saving (104) the designated string, the translation result of the designated string and the context information of the designated string in a preset string database in a correspondence manner, the method further comprises:
displaying (205) the designated string, the translation result of the designated string and the context information of the designated string when an instruction of viewing the designated string in the preset string database is detected.

4. The method of any one of the preceding claims, wherein the method further comprises:
acquiring saving time information of the designated string, the translation result of the designated string and the context information of the designated string; and
saving the saving time information in the preset string database together with saving of the designated string, the translation result of the designated string and the context information of the designated string in a correspondence manner.

5. The method of any one of the preceding claims, wherein said acquiring context information of the designated string comprises:
acquiring screen shot of current location of the designated string; and
identifying the context information of the designated string according to result of the screen shot.

6. A device for string saving, comprising:
a first acquiring module (301) configured to acquire a designated string to be saved;
a second acquiring module (302) configured to acquire translation result of the designated string;
the first acquiring module (301) is further configured to acquire context information of the designated string;
a saving module (303) configured to saving the designated string, the translation result of the designated string and the context information of the designated string in a preset string database in a correspondence manner.

7. The device of claim 6, wherein said first acquiring module (301) is configured to:
determine any string as the designated string to be saved when a truncation operation of a mouse on the string is detected; and/or
determine any string as the designated string to be saved when a time period of cursor of a mouse staying over the string is detected to be longer than a preset time period.

8. The device of claim 6 or 7, wherein the device further comprises:
a displaying module configured to display the designated string, the translation result of the designated string and the context information of the designated string when an instruction of viewing the designated string in the preset string database is detected.

9. The device of any one of claims 6 to 8, wherein the first acquiring module (301) is further configured to acquire saving time information of the designated string, the translation result of the designated string and the context information of the designated string; and
the saving module (303) is further configured to save the saving time information in the preset string database together with saving of the designated string, the translation result of the designated string and the context information of the designated string in a correspondence manner.

10. The device of any one of claims 6 to 9, wherein the second acquiring module (302) is configured to:
acquire screen shot of current location of the designated string; and
identify the context information of the designated string according to result of the screen shot.

11. The device of any one of claims 6 to 10, comprising:
a processor;
a memory for storing instructions executable by the processor;
wherein the processor comprises the first acquiring module (301), the second acquiring module (302), and the saving module (303).

12. A computer program including instructions for executing steps of a method for string saving according to any one of claims 1 to 5 when said program is executed by a computer.

13. A recording medium readable by a computer and having recorded thereon a computer program according to claim 12.
